# EUROPÄISCHE PATENTSCHRIFT

(11) **EP 0 733 669 B1**
(45) Veröffentlichungstag und Bekanntmachung des Hinweises auf die Patenterteilung: **31.07.2002**
(21) Anmeldenummer: 96104013.6
(22) Anmeldetag: 14.03.1996
(51) Int. Cl.: C08J 11/22, C08J 11/24

(54) **Verfahren zur Verwertung von Kunststoffabfällen, in denen Polyurethane im Gemisch mit anderen Kunststoffen vorliegen**
Method for utilizing scrap plastic whereby polyurethanes have been co-mingled with other plastics
Procédé pour l'utilisation de déchets de résines synthétiques à partir de mélanges de polyuréthannes avec d'autres résines synthétiques

(30) Priorität: 23.03.1995 DE 19510638
(43) Veröffentlichungstag der Anmeldung: 25.09.1996
(73) Patentinhaber: BASF AKTIENGESELLSCHAFT, 67056 Ludwigshafen (DE)
(72) Erfinder: Naber, Bernhard, 01987 Schwarzheide (DE); Neiss, Vera, 01987 Schwarzheide (DE); Gassan, Michael, 01968 Senftenberg (DE); Deutsch, Werner, 82299 Tuerkenfeld (DE)

(56) Entgegenhaltungen:
- EP-B- 0 011 661
- DE-A- 4 234 335
- US-A- 4 159 972

## Beschreibung

Die Erfindung betrifft ein Verfahren zur Verwertung von Kunststoffabfällen, in denen Polyurethane im Gemisch mit anderen Kunststoffen vorliegen.

Polyurethane werden in vielen Bereichen der Wirtschaft verwendet. Zur Erzielung bestimmter Eigenschaften werden sie dabei häufig in Kombination mit anderen Werkstoffen eingesetzt. Eine besondere Rolle spielen hierbei thermoplastische Kunststoffe, die gegebenenfalls mit Glasfasern verstärkt sein können. Häufig eingesetzte thermoplastische Kunststoffe sind Polyvinylchlorid, Polyethylenterephthalat, Polystyrol, Copolymerisate aus Styrol, Butadien und Acrylnitril oder auch Polyolefin, z.B. Polypropylen, die häufig auch als Polymergemische, sogenannte Blends, vorliegen.

Die Verwertung von Abfällen aus derartigen Kunststoffgemischen bereitet naturgemäß weitaus größere Probleme als die Verwertung sortenreiner Kunststoffabfälle. Daher wurden derartige Abfälle bisher zumeist deponiert oder verbrannt. Diese Wege sind jedoch auf Grund des knappen Deponieraumes und der verbreiteten Vorbehalte gegen die Verbrennung zunehmend schwieriger zu beschreiten. Daher wurde bereits in der Vergangenheit eine Reihe von Verfahren zur Verwertung derartiger Kunststoffgemische vorgestellt.

So wird in EP-A-594 307 ein Verfahren zur Trennung von Kunststoffabfällen aus Kfz-Instrumententafeln, die aus PVC und Polyurethanschaum bestehen, beschrieben. Hierbei werden die Abfälle gemahlen und danach über Zyklone in einen Strom aus reinem PVC und einen Strom aus mit Polyurethanschaum verunreinigtem PVC getrennt. Während die PVC-Fraktion wiederverwendet werden kann, ist eine Verwendung der PVC-Polyurethanschaum-Fraktion nicht angegeben.

In Kunststoffe 84 (1994) 3, Seiten 272 bis 275, wird das Recycling von Kraftfahrzeug-Instrumententafeln aus Verbundwerkstoffen beschrieben, wobei neben reinen Fraktionen aus thermoplastischen Kunststoffen, die wiederverwendet werden können, eine Fraktion aus Polyurethanschaum und thermoplastischen Kunststoffen anfällt, für die keine Verwendung angegeben werden kann.

Da Polyurethanschäume nicht thermoplastisch sind, werden sie, wenn überhaupt, zumeist durch chemisches Recycling verwertet.

Ein häufig eingesetztes Verfahren zum chemischen Recycling von Polyurethan-Abfällen ist die sogenannte Glykolyse. Dabei werden die Polyurethan-Abfälle bei erhöhter Temperatur, zumeist im Beisein von Katalysatoren, mit mindestens zweiwertigen Alkoholen behandelt.

Die dabei entstehenden polyolischen Flüssigkeiten können durch Umsetzung mit Isocyanaten in Anwesenheit der bekannten Hilfs- und Zusatzstoffe wieder zu Polyurethanen verarbeitet werden.

Die Glykolyse ist als Verfahren häufig beschrieben, beispielsweise in DE-A-25 16 863, DE-A-25 57 172, DE-C-37 02 495, DE-A-42 34 335, US-A-3,109,824 oder US-A-3,404,103, sowie in W. Raßhofer, "Recycling von PUR-Kunststoffen", Huthig-Verlag, Heidelberg, 1994.

Bei der Aufarbeitung von Gemischen aus Polyurethanen und thermoplastischen Kunststoffen kommt es bei dem bekannten Glykolyseverfahren jedoch zu Problemen.

Da die thermoplastischen Kunststoffe unter den üblichen Glykolysebedingungen schmelzen, bilden sie im Reaktionsgemisch Klumpen, Schmelzesträhnen und Anbackungen. Dadurch kann es zu Rührerausfällen, Störungen bei der Wärmeübertragung oder Verkleben der Dosier- und Abfüllöffnungen und zu teilweise havariemäßigen Verfahrensstörungen kommen. Damit ist eine großtechnische Aufarbeitung derartiger Gemische nach den üblichen Glykolyseverfahren nicht möglich.

Der Erfindung lag nun die Aufgabe zugrunde, ein Verfahren zu entwickeln, bei dem im Gemisch mit thermoplastischen Kunststoffen vorliegende Polyurethane ohne die Nachteile des Standes der Technik glykolisiert werden können und das zu einem Glykolysepolyol führt, das wieder zur Herstellung von Polyurethanen eingesetzt werden kann.

Erfindungsgemäß wurde die Aufgabe überraschenderweise dadurch gelöst, daß als Alkoholkomponente für die Glykolyse ein Gemisch aus mindestens einem niedermolekularen, mindestens zweifunktionellen Alkohol und mindestens einem hochmolekularen Polyetherpolyol eingesetzt wird.

Bei Verwendung einer derartigen Alkoholmischung kommt es überraschenderweise dazu, daß die thermoplastischen Kunststoffe im Reaktionsgemisch in Form kleiner Partikel vorliegen, ohne daß es zu Agglomerisationen oder sonstigen Zusammenschlüssen dieser Partikel kommt. Die Partikel können mit den üblichen Reinigungsverfahren, beispielsweise durch Filtration, aus dem fertigen Glykolysat entfernt werden. Es kommt weder zu einer Beeinträchtigung der Qualität des Glykolysats noch zu den oben beschriebenen Verfahrensproblemen.

Vorzugsweise wird als Glykolysepolyol eine Mischung aus mindestens einem niedermolekularen zweifunktionellen Alkohol mit einem Molekulargewicht bis 400 und mindestens einem Polyetherpolyol, der in seinem Aufbau dem Polyetheralkohol entspricht, der zur Herstellung des Polyurethan-Recyclats eingesetzt wurde.

Als niedermolekulare, mindestens zweifunktionelle Alkohole werden insbesondere solche mit Molekulargewichten von 62 bis 400 eingesetzt. Besonders vorteilhaft sind zwei- oder dreifunktionelle Alkohole, die bei Raumtemperatur flüssig sind, wie Glyzerin, insbesondere zweifunktionelle Alkohole, wie Butandiol-1,4, Pentandiol-1,5, Hexandiol-1,6, bevorzugt Ethylenglykol, Diethylenglykol, Propylenglykol, Dipropylenglykol, besonders bevorzugt Diethylenglykol.

Als Polyetherpolyole können die üblichen, zur Herstellung von Polyurethan-Kunststoffen verwendeten Produkte eingesetzt werden. Derartige Produkte werden zumeist durch basisch katalytische Anlagerung von niederen Alkylenoxiden, insbesondere Ethylenoxid und/oder Propylenoxid, an H-funktionelle Startsubstanzen hergestellt.

Polyetheralkohole für Polyurethan-Weich- und Halbhartschäume werden zumeist durch Anlagerung von Ethylenoxid und/oder Propylenoxid an zwei- und/oder dreiwertige H-funktionelle Startsubstanzen, insbesondere Glycerin und/oder Glykole, wie Ethylenglykol oder Propylenglykol, hergestellt und haben zumeist Hydroxylzahlen im Bereich von 25 bis 60 mg KOH/g. Polyetheralkohole zur Herstellung von Polyurethan-Hartschäumen werden zumeist durch Anlagerung von Ethylenoxid und/oder Propylenoxid an mindestens dreifunktionelle Startsubstanzen, beispielsweise Zukkeralkohol oder aromatische Amine, wie TDA oder Anilin-Formaldehyd-Kondensationsprodukte, hergestellt und haben zumeist eine Hydroxylzahl im Bereich von 300 bis 800 mg KOH/g.

Weitere Angaben über diese Polyetheralkohole finden sich beispielsweise im Kunststoffhandbuch, Band 7, "Polyurethane", herausgegeben von Günter Oertel, 3. Auflage, Carl-Hauser-Verlag München, 1993.

Zur bevorzugten Durchführung des erfindungsgemäßen Verfahrens ist es nicht erforderlich, daß als Polyetherpolyol ein mit dem zur Herstellung des zu glykolisierenden Polyurethans verwendeten Polyetherpolyol völlig identisches Produkt verwendet wird.

Es genügt vielmehr, wenn der zur Glykolyse eingesetzte Polyetheralkohol in seinem Aufbau dem zur Herstellung des Polyurethan-Recyclat entspricht, d.h., wenn es sich um ein Polyetherpolyol handelt, wie es zur Herstellung eines solchen Polyurethans üblicherweise verwendet wird.

So werden zur Glykolyse von Polyurethan-Weichschaum- oder Halbhartschaum-Recyclat erfindungsgemäß insbesondere Weichschaum-Polyetherpolyole, d.h. solche mit einer Funktionalität von 2 bis 3 und einer Hydroxylzahl von 35 bis 60 mg KOH/g, eingesetzt.

Für die Glykolyse von Polyurethan-Hartschaumstoffen werden demzufolge erfindungsgemäß insbesondere Hartschaum-Polyetherpolyole, wie oben beschrieben, eingesetzt.

Das Gewichtsverhältnis von polyurethanhaltigem Kunststoffgemisch : niedermolekularem Alkohol : Polyetherpolyol beträgt vorzugsweise von 1 bis 5 : 1 bis 2 : 1 bis 10 Gew.-Teile.

Zur Durchführung des erfindungsgemäßen Verfahrens wird das Kunststoffgemisch mit der Alkoholkomponente vermischt, auf die Reaktionstemperatur erwärmt und bis zum Abschluß der Glykolyse bei dieser Temperatur belassen. Der Abschluß der Glykolyse ist erkennbar an der Einstellung einer konstanten Viskosität des Reaktionsgemisches. Bei den in der Praxis üblichen Ansatzverhältnissen beträgt die Reaktionszeit zumeist etwa 120 bis 240 Minuten. Danach wird abgekühlt, die Partikel aus thermoplastischen Kunststoffen auf mechanischem Wege, üblicherweise durch Filtration, aus dem Glykolysat entfernt und das Glykolysat wie üblich aufgearbeitet.

Um die Auflösung der Altkunststoffe in der Alkoholkomponente zu erleichtern, sollten sie auf eine Partikelgröße von ca. 5 mm zerkleinert werden. Während der Umsetzung ist das Rühren der Reaktionsmischung unerläßlich.

Die Glykolysetemperatur beträgt vorzugsweise 180 bis 235°C, insbesondere 190 bis 210°C.

Um den Gehalt an aromatischen Aminen im Glykolysat gering zu halten, ist es vorteilhaft, wie in DE-A-42 34 335 beschrieben, während der Glykolyse Glycidylether zum Reaktionsgemisch zu dosieren. Die Dosierung der Glycidether erfolgt hierbei kontinuierlich über die gesamte Glykolysereaktionszeit.

Zur Beschleunigung der Umsetzung können Katalysatoren eingesetzt werden. Hierfür eignen sich insbesondere Verbindungen des Titans und des zwei- und vierwertigen Zinns.

Die thermoplastischen Kunststoffe, die gemeinsam mit den Polyurethan-Schaumstoffen im Recyclingmaterial vorliegen, wirken sich bei dem erfindungsgemäßen Verfahren weder auf die Verfahrensführung noch auf die Qualität des Endproduktes negativ aus. Sie werden in eine Form überführt, in der sie leicht aus dem Endprodukt abgetrennt werden können und keine störenden Wechselwirkungen mit den anderen Komponenten des Reaktionsgemisches eingehen.

Damit ist es erstmals möglich, Mischfraktionen aus Polyurethanschaum und thermoplastischen Kunststoffen, wie sie beispielsweise bei der Verwertung von Abfällen aus Kraftfahrzeugarmaturentafeln anfallen, und die bisher verworfen wurden, einer sinnvollen stofflichen Verwertung zuzuführen. Die erhaltenen Glykolysate können wieder als Polyolkomponente zur Herstellung von Polyurethanen verwendet werden.

Die Erfindung soll an folgenden Beispielen näher erläutert werden.

### Beispiel 1 (Vergleich)

3 kg Kunststoff-Stanzabfälle aus der PKW-Armaturentafelproduktion, die auf eine Partikelgröße von ca. 5 mm zerkleinert wurden, bestehend aus ca. 70 Gew.-% PUR-Halbhartschaum, ca. 12 Gew.-% eines Acrylnitril-Butadien-Styrol/Polyvinylchlorid-Blends und ca. 18 Gew.-% glasfaserverstärktem Polypropylen wurden zusammen mit 10 kg Diethylenglykol in einen 25 l-Rührkessel überführt, mit Stickstoff inertisiert, auf eine Temperatur von 200°C aufgeheizt und 3 h bei dieser Temperatur belassen. Während dieser Zeit wurden dem Reaktionsgemisch kontinuierlich 1300 g 2-Ethylhexylglycidether zudosiert. Danach wurde das Reaktionsgemisch auf Raumtemperatur abgekühlt.

Es wurde ein flüssiges Glykolysat erhalten, wobei Klumpen und Randabsetzungen ein Entleeren des Kessels unmöglich machten. Der Reaktionsansatz mußte verworfen werden.

### Beispiel 2

Es wurde verfahren wie in Beispiel 1, allerdings wurde als Alkoholkomponente ein Gemisch aus 1 kg Diethylenglykol und 9 kg eines dreifunktionellen Polyetheralkohols auf Basis Glycerin/Propylenoxid mit einer Hydroxylzahl von 35 mg KOH/g eingesetzt. Die thermoplastischen Kunststoffe lagen in Form von ca. 5 mm großen Partikeln im Glykolysat vor und konnten durch Filtrieren vollständig entfernt werden.

Das Glykolysat hatte eine Hydroxylzahl von 93 mg KOH/g, eine Säurezahl von 0,25 mg KOH/g und eine Viskosität von 1.520 mPa·s.

### Beispiel 3

1 kg eines zerkleinerten Kunststoffgemisches aus ca. 82 Gew.-% PUR-Hartschaum und ca. 18 Gew.-% Acrylnitril-Butadien-Styrol/Polyvinylchlorid-Blend und glasfaserverstärktem Polypropylen und ein Gemisch aus 1 kg Diethylenglykol und 1 kg eines dreifunktionellen Polyetheralkohols auf Basis Glycerin/Propylenoxid mit einer Hydroxylzahl von 530 mg KOH/g wurden wie in Beispiel 2 beschrieben umgesetzt und aufgearbeitet.

Das Glykolysat hatte eine Hydroxylzahl von 580 mg KOH/g, eine Säurezahl von 1,26 mg KOH/g und eine Viskosität von 11.680 mPa·s.

### Beispiel 4

2 kg eines zerkleinerten Kunststoffgemisches aus 88 Gew.-% Polyurethan-Weichschaum und 12 Gew.-% Polystyrol und ein Gemisch aus 1 kg Diethylenglykol und 1 kg eines Polyetheralkohols wie in Beispiel 2 wurden wie in Beispiel 2 beschrieben umgesetzt und aufgearbeitet.

Das entstehende Glykolysat hatte eine Hydroxylzahl von 233 mg KOH/g, eine Säurezahl von 0,32 mg KOH/g und eine Viskosität von 1.202 mPa·s.

### Beispiel 5

3 kg eines zerkleinerten Kunststoffgemisches aus ca. 76 Gew.-% PUR-Halbhartschaum und ca. 24 Gew.-% Polypropylen und Ethylen-Propylen-Dien-Polymethylen-polymer und ein Gemisch aus 1 kg

Diethylenglykol und 8 kg eines Polyetheralkohols wie in Beispiel 2 wurden wie in Beispiel 2 beschrieben umgesetzt und aufgearbeitet.

Das entstehende Glykolysat hatte eine Hydroxylzahl von 125 mg KOH/g, eine Säurezahl von 0,11 mg KOH/g und eine Viskosität von 1.484 mPa·s.

Die Bestimmung der Hydroxylzahl erfolgte gemäß DIN 53 240, die der Säurezahl gemäß DIN 53 402 und die der Viskosität gemäß DIN 53 015 bei 25°C.

## Patentansprüche

1. Verfahren zur Verwertung von Kunststoffabfällen, in denen Polyurethane im Gemisch mit anderen Kunststoffen vorliegen, **dadurch gekennzeichnet, daß** die Kunststoffabfälle mit einem Alkoholgemisch aus mindestens einem niedermolekularen, mindestens zweifunktionellen Alkohol und mindestens einem Polyetherpolyol umgesetzt werden und danach der entstandene Glykolysepolyol auf mechanischem Weg von den übrigen Kunststoffabfällen abgetrennt wird.

2. Verfahren nach Anspruch 1, **dadurch gekennzeichnet, daß** als niedermolekulare, mindestens zweifunktionelle Alkohole solche mit einem Molekulargewicht von 62 bis 400 und einer Funktionalität von 2 oder 3 eingesetzt werden.

3. Verfahren nach Anspruch 1 oder 2, **dadurch gekennzeichnet, daß** als niedermolekulare Alkohole zweifunktionelle Alkohole eingesetzt werden.

4. Verfahren nach einem der Ansprüche 1 bis 3, **dadurch gekennzeichnet, daß** als niedermolekularer, mindestens zweifunktioneller Alkohol Diethylenglykol eingesetzt wird.

5. Verfahren nach einem der Ansprüche 1 bis 4, **dadurch gekennzeichnet, daß** als Polyetheralkohol ein solcher verwendet wird, der dem zur Herstellung des eingesetzten Polyurethans verwendeten Polyetheralkohol in seinem Aufbau entspricht.

6. Verfahren nach einem der Ansprüche 1 bis 5, **dadurch gekennzeichnet, daß** bei der Glykolyse von Polyurethan-Weich- oder Halbhartschäumen mindestens ein 2- und/oder 3-funktioneller Polyetheralkohol mit einer Hydroxylzahl von 20 bis 60 mg KOH/g eingesetzt wird.

7. Verfahren nach einem der Ansprüche 1 bis 5, **dadurch gekennzeichnet, daß** bei der Hydrolyse von Polyurethan-Hartschäumen mindestens ein drei- oder höherfunktioneller Polyetheralkohol mit einer Hydroxylzahl von 200 bis 800 mg KOH/g eingesetzt wird.

8. Verfahren nach einem der Ansprüche 1 bis 7, **dadurch gekennzeichnet, daß** dem Reaktionsgemisch während der Glykolyse mindestens ein Glyzidether zugesetzt wird.

## Claims

1. A process for recycling plastic waste containing a mixture of polyurethanes and other plastics, which comprises reacting the plastic waste with an alcohol mixture comprising at least one low-molecular-weight, at least difunctional alcohol and at least one polyether-polyol, and then separating the resultant glycolysis polyol mechanically from the other plastic waste.

2. A process as claimed in claim 1, wherein the low-molecular-weight, at least difunctional alcohol has a molecular weight of from 62 to 400 and a functionality of 2 or 3.

3. A process as claimed in claim 1 or 2, wherein the low-molecular-weight alcohol is a difunctional alcohol.

4. A process as claimed in any of claims 1 to 3, wherein the low-molecular-weight, at least difunctional alcohol is diethylene glycol.

5. A process as claimed in any of claims 1 to 4, wherein the polyether alcohol corresponds in structure to the polyether alcohol used to prepare the polyurethane employed.

6. A process as claimed in any of claims 1 to 5, wherein flexible or semirigid polyurethane foams are glycolyzed using at least one difunctional and/or trifunctional polyether alcohol having a hydroxyl number of from 20 to 60 mg of KOH/g.

7. A process as claimed in any of claims 1 to 5, wherein rigid polyurethane foams are hydrolyzed using at least one trifunctional or polyfunctional polyether alcohol having a hydroxyl number of from 200 to 800 mg of KOH/g.

8. A process as claimed in any of claims 1 to 7, wherein at least one glycidyl ether is added to the reaction mixture during the glycolysis.

## Revendications

1. Procédé pour l'utilisation de déchets de matières plastiques contenant du polyuréthane mélangé à d'autres matières plastiques, **caractérisé en ce que** les déchets de matières plastiques sont transformés avec un mélange d'alcools constitué d'au moins un alcool de faible poids moléculaire au moins bi-fonctionnel et d'au moins un polyalcool polyéther et **en ce que** le polyalcool de glycolyse obtenu est ensuite séparé par voie mécanique des autres déchets de matières plastiques.

2. Procédé selon la revendication 1, **caractérisé en ce qu'**on utilise à titre d' alcools de faible poids moléculaire au moins bi-fonctionnels des alcools présentant un poids moléculaire de 62 à 400 et une fonctionnalité de 2 ou 3.

3. Procédé selon l'une quelconque des revendications 1 ou 2, **caractérisé en ce qu'**on utilise à titre d'alcools de faible poids moléculaire des alcools bi-fonctionnels.

4. Procédé selon l'une quelconque des revendications 1 à 3, **caractérisé en ce qu'**on utilise à titre d'alcool de faible poids moléculaire au moins bi-fonctionnel du diéthylèneglycol.

5. Procédé selon l'une quelconque des revendications 1 à 4, **caractérisé en ce qu'**on utilise, à titre d'alcool polyéther, un alcool polyéther dont la structure correspond à l'alcool polyéther utilisé pour la fabrication des polyuréthanes mis en oeuvre.

6. Procédé selon l'une quelconque des revendications 1 à 5, **caractérisé en ce qu'**on utilise, lors de la glycolyse de mousses de polyuréthane souples ou semi-dures, au moins un alcool polyéther à 2 et/ou à 3 fonctions avec un indice d'hydroxyle de 20 à 60 mg KOH/g.

7. Procédé selon l'une quelconque des revendications 1 à 5, **caractérisé en ce qu'**on utilise, lors de l'hydrolyse de mousses de polyuréthane dures, au moins un alcool polyéther à trois fonctions ou plus avec un indice d'hydroxyle de 200 à 800 mg KOH/g.

8. Procédé selon l'une quelconque des revendications 1 à 7, **caractérisé en ce que** pendant la glycolyse, au moins un éther de glycide est ajouté au mélange réactif.
